# EUROPÄISCHE PATENTSCHRIFT

(11) **EP 1 306 451 B1**
(45) Veröffentlichungstag und Bekanntmachung des Hinweises auf die Patenterteilung: **07.03.2012**
(21) Anmeldenummer: 02022663.5
(22) Anmeldetag: 10.10.2002
(51) Int. Cl.: G01N 29/11, C21C 5/30, C21C 5/46, C21C 5/52

(54) **Verfahren und Vorrichtung zur Bestimmung der Schaumschlackenhöhen beim Frischvorgang in einem Blasstahlkonverter**
Method and device to determine the height of the foamed slag layer during oxygen blowing in a steel converter
Procédé et dispositif pour mesurer l'épaisseur d'un laitier moussant dans un convertisseur d'acier pendant le procédé d'affinage

(30) Priorität: 24.10.2001 DE 10152371
(43) Veröffentlichungstag der Anmeldung: 02.05.2003
(73) Patentinhaber: SMS Siemag AG, 40237 Düsseldorf (DE)
(72) Erfinder: Hufen, Helge, 47239 Duisburg (DE); Heblik, Ralf, 46537 Dinslaken (DE); Uebber, Norbert, 40764 Langenfeld (DE)
(74) Vertreter: Klüppel, Walter

(56) Entgegenhaltungen:
- EP-A1- 0 104 747
- EP-A2- 0 130 960
- WO-A-01/27338
- DE-B- 1 182 271
- GB-A- 1 511 739
- JP-A- 6 200 288

## Beschreibung

Die Erfindung betrifft ein Verfahren und eine Vorrichtung zur Bestimmung der Schaumschlackenhöhen beim Frischvorgang in einem Blasstahlkonverter, wobei als Kenngröße für die aufschäumende Schlacke die Schallemissionen des Blasstahlkonverters im Bereich des Konvertermundes mit Hilfe eines Mikrofons aufgenommen und entsprechend ausgewertet werden.

Beim Frischvorgang in Blasstahlkonvertern unter Bildung einer reaktionsfähigen, schäumenden Schlacke steigt die entstehende Schaumschlacke innerhalb des zumeist lotrecht stehenden Blasstahlkonverters an. Dabei besteht dann die Gefahr, dass die Schaumschlacke "überkocht" und aus der Konverteröffnung ausgeworfen wird. Um das Ausbringen des Konverters sowie die Schlackenmetallurgie nicht negativ zu beeinflussen, muss dieses Überkochen" und Auswerfen der Schlacke vermieden oder vermindert werden. Weiterhin kann es zu einer Gefährdung des Personals durch Schlackenauswurf kommen.

Zur Erkennung des Zustandes, bei dem eine kritische Schaumschlackenhöhe erreicht wird, ist es bekannt, sich der akustischen Emissionen am Konvertermund zu bedienen, deren maßgebende akustische Quelle im Bereich des Düsenaustritts der Blaslanze zur Stahlschmelze oder Schlacke liegt. Die hier erzeugten Schallwellen erfahren mit größer werdender Schaumschlackenhöhe eine zunehmende Absorption durch die Schaumschlacke, weshalb die Schallemissionen als Kenngröße für die Schaumschlackenhöhe verwendet werden können.

Um ein möglichst großes Nutzsignal-Rauschverhältnis zu erreichen, ist es bekannt, zur Schallmessung das Mikrofon möglichst nahe am Konvertermund anzuordnen. Hierbei ist dann in der Regel eine Schutzvorrichtung für das Mikrofon notwendig, um dieses vor Hitze und Staub zu schützen. Derartige Schutzvorrichtungen, beispielsweise in Form eines Schallrohrs oder in Form einer Gasbeschleierung des Mikrofons beeinflussen allerdings negativ das Nutzschallsignal, so dass eine exakte Bestimmung der Schaumschlackenhöhe und insbesondere des kritischen Zeitpunkts des Schlackenauswurfs oft nicht möglich ist.

Die Anmeldung EP 0130960 offenbart ein Verfahren zur Überwachung der Schaumschlackenhöhe in einem Konverter, wobei dazu Schallmessungen in zwei Frequenzbändern durchgeführt werden. Die Messung der Schaumschlackenhöhe zwischen der Schlacke und der Lanzenspitze wird bei Frequenzen zwischen 150Hz und 1000Hz, vorzugweise bei Frequenzen zwischen 300Hz und 500Hz durchgeführt. Zur Bestimmung der Schaumschlackenhöhe zwischen Lanzenspitze und Konvertermund werden Frequenzen eines zweiten Frequenzbandes zwischen 5Hz und 40Hz verwendet.

Die Anmeldung JP 06200288 offenbart ein Verfahren und eine Vorrichtung zur Bestimmung der Schaumschlackenhöhe in einem Konverter während des Frischvorgangs, wobei ein Mikrofon in einem Abstand zum Konvertermund angeordnet ist und den emittierten Schall aus dem Konverter detektiert. Es werden Frequenzen bis zu 1875 kHz detektiert.

Die Auslegeschrift DE 1182271 offenbart ebenfalls ein Verfahren und eine Vorrichtung zur Bestimmung der Schaumschlackenhöhe in einem Konverter während des Frischvorgangs, wobei ein Mikrofon den Schall im Konverter detektiert. Es werden Frequenzen zwischen 40Hz und 60Hz, zwischen 200Hz und 300Hz und zwischen 15000Hz und 16000Hz detektiert.

In der deutschen Offenlegungsschrift DE 14 58 831 A1 wird eine Vorrichtung zur Überwachung des Frischvorgangs in einem Konverter mit Abzugshaube beschrieben, wobei ein richtungsempfindliches Mikrofon zur Aufnahme von Schallschwingungen im Frequenzbereich zwischen 150 und 300 Hz Verwendung findet. Zur Messung des Schalls ist die Abzugshaube des Konverters mit einem Schalltrichter versehen, an dessen Ende das Mikrofon angeordnet ist.

Aus der EP 0 402 344 B1 ist ein Verfahren zur Schlackenführung in einem Blasstahlkonverter wahrend des Frischens bekannt, wobei über ein in der Abgashaube des Konverters angeordnetes Schallleitrohr die durch die Schlacke emittierten Schallwellen zu einem Schallaufnehmer mit einem Mikrofon geleitet werden. Der Schallaufnehmer mit dem Mikrofon wird dabei zum Schutz gegen eine unzulässige thermische Beanspruchung und einer übermäßigen Verschmutzung mit Stickstoff gespült.

Schließlich ist aus der EP 0 637 634 A1 ein Verfahren bekannt, bei dem, um die Umhüllung des Lichtbogens in einem Elektro-Lichtbogenofen mit Schaumschlacke über einen größeren Zeitraum mit möglichst geringem Aufwand sicherzustellen, mehrmals eine Schallpegelmessung durchgeführt wird. Hierzu ist ein Mikrofon in die Abgasleitung des Elektrolichtbogenofens in einem Abstand von ca. 3 m vom Elektrolichtbogenofen angeordnet, das die Schallpegelmessung im Frequenzbereich zwischen 100 und 500 Hz ermöglicht.

Ausgehend von diesem bekannten Stand der Technik ist es Aufgabe der Erfindung, ein Verfahren und ein Schallmesssystem anzugeben, durch das besonders signifikant, zuverlässig und wartungsfrei unter Vermeidung der genannten Nachteile die Schaumschlackenzustände, insbesondere der Zeitpunkt des Schlackenauswurfs während des Frischens im Blasstahlkonverters erkannt werden.

Die gestellte Aufgabe wird verfahrensmäßig gelöst mit den kennzeichnenden Maßnahmen des Anspruchs 1 und vorrichtungsmäßig mit den kennzeichnenden Merkmalen des Anspruchs 4. Vorteilhafte Ausgestaltungen der Erfindung sind in den zugeordneten Unteransprüchen angegeben.

Erfindungsgemäß werden zur Charakterisierung der Schaumschlackenhöhen die emittierten höheren Schallfrequenzen ab ca. 1 kHz genutzt, und unter anderem bei 2 kHz. Bei Analysen des hörbaren Frequenzbereiches über die gesamte Blaszeit (Frischzeit) des Konverters wurde die Beobachtung gemacht, dass mindestens zwei Frequenzbereiche existieren, die unterschiedliche Prozessaspekte charakterisieren. Der Prozessaspekt des Schlackenauswurfs wird dabei besonders signifikant von höheren Frequenzen oberhalb von ca. 1 kHz charakterisiert. Die Schallpegel verringern sich dann plötzlich und deutlich, da die dämpfende Wirkung der Schaumschlacke, die nun bis zum Konvertermund reicht, ein Maximum erreicht.

Bei den bisher bekannten Verfahren der Schallemissionsmessung wird dieser höhere Frequenzbereich zum Erkennen von Schlackenauswurf vernachlässigt. Die Gründe hierfür liegen vermutlich in der verwendeten Mikrofonschutzvorrichtung, durch die hohe Frequenzen zunehmend absorbiert werden oder bei Verwendung einer Gasbeschleierung des Mikrofons durch die Überlagerung hoher Frequenzen.

Damit die durch das Mikrofon erfassten hohen Frequenzen auch mit einem hohen Nutzsignal-Rauschverhältnis erfasst werden können, nutzt das Mikrofon zur Verstärkung des Nutzsignals und zur Verstärkung seiner Richtwirkung erfindungsgemäß die unter anderem für hohe Schallfrequenzen selektive Verstärkungswirkung einer Parabolantenne, wozu das Mikrofon im Brennpunkt der Parabolantenne angeordnet ist. Durch diese Maßnahme - mit dem Ergebnis eines verstärkten Nutzsignals und einer verbesserten Richtwirkung - ist es erfindungsgemäß möglich, das Mikrofon mit Abstand so weit vom Konverter anzuordnen, dass auf die Verwendung irgendwelcher Schutzmaßnahmen verzichtet werden kann. Das höher frequente Nutzsignal erhält man dadurch ohne die sonst übliche Verfälschung oder Dämpfung durch derartige Maßnahmen.

Weitere Vorteile, Einzelheiten und Merkmale der Erfindung werden nachfolgend an einem in einer schematischen Zeichnungsfigur dargestellten Ausführungsbeispiel sowie in der Darstellung einer Schallmessung näher erläutert.

Es zeigen:
- Fig. 1: eine Schallaufzeichnung (Sonogramm),
- Fig. 2: einen Blasstahlkonverter mit einer erfindungsgemäßen Messanordnung.

In Figur 1 ist beispielhaft das Ergebnis einer Schallmessung während des Frischvorgangs in Form eines Sonogramms aufgezeichnet. Im dargestellten Diagramm sind über die Zeit t, unterteilt in 100 Sekunden-Abschnitte, die gemessenen Schalldruckpegel (erkennbar durch den Schwärzungsgrad) in Abhängigkeit von der Frequenz F im Bereich von 0 - 4 kHz aufgetragen.

Generell kann dabei festgestellt werden, dass der Schalldruckpegel zu höheren Frequenzen geringer wird.

Wie aus dem Sonogramm ersichtlich, ist bis zum Frequenzbereich von 1 kHz keine eindeutige zeitliche Veränderung bei relativ hohem Schalldruckpegel während des Frischvorgangs feststellbar, wie beispielhaft bei 1 kHz (Linie A) oder darunter erkennbar wird. Erst bei höheren Frequenzen, beispielsweise bei 2 kHz (Linie B) ist dagegen ein starker Pegelabfall feststellbar, der besonders deutlich zwischen t = 400 sec und t = 500 sec hervortritt. Aus diesem Pegelabfall kann dann auf einen starken Anstieg der Schaumschlacke und schließlich auf einen Schlackenauswurf geschlossen werden. Der Bereich des Schlackenauswurfs ist im Sonogramm mit dem Pfeil Z gekennzeichnet.

In Figur 2 ist ein Blasstahlkonverter 1 während des Frischvorgangs mit einer erfindungsgemäßen Messanordnung 10 dargestellt. Das Einblasen von Sauerstoff 5 geschieht im dargestellten Konverter 1 durch Düsen 4 im Konverterboden 2 und durch eine durch den Konvertermund 3 mit ihrer Düsenöffnung bis dicht oberhalb der Stahlschmelze 6 oder Schlacke 9 geführten Sauerstofflanze 7.

Durch den Blasvorgang und die hierdurch hervorgerufenen Umwandlungsreaktionen schäumt die Schlacke 9 auf, wird voluminöser und steigt als Schaumschlacke 9' innerhalb des Konverters 1 nach oben an. Zur Erfassung der aus dem Konvertermund 3 aufgrund des Blasvorgangs austretenden akustischen Emissionen 8 zur Beurteilung der Höhe der Schaumschlackenschicht 9' ist in einiger Entfernung vom Konverter 1 eine Messanordnung 10 vorgesehen mit einem Mikrofon 11 und einer mit dem Mikrofon über eine Leitung 14 verbundenen Auswerteeinrichtung 13. Zur besseren Richtwirkung des Mikrofons 11 und zur besseren selektiven Erfassung höherer Frequenzen ab ca. 1 kHz ist erfindungsgemäß das Mikrofon 11 im Brennpunkt einer Parabolantenne 12 angeordnet. Durch diese erfindungsgemäße Maßnahme ist es dann auch möglich, wie schematisch dargestellt, das Mikrofon 11 ohne Schutzmaßnahmen örtlich weit vom Konverter 1 anzuordnen, ohne dass diese Entfernung sich negativ auf die Schallmessung auswirkt.

In der schematischen Darstellung von Fig. 2 ist die Messanordnung 10 mit Mikrofon 11 und Parabolantenne 12 vergrößert dargestellt, um die räumliche Entfernung zum Konverter 1 hervorzuheben. Die hierbei vorgenommene Anordnung und Ausbildung der Messanordnung 10 ist allerdings nicht zwingend, sondern kann entsprechend den örtlich vorhandenen Gegebenheiten und den herrschenden sonstigen akustischen Emissionen weitgehend variiert werden, um eine erfindungsgemäße Messung höherer Frequenzen ab ca. 1 kHz, und unter anderem bei 2 kHz, zur sicheren Beurteilung der Schaumschlackenhöhen duchführen zu können.

### Bezugszeichenliste

- 1: Konverter
- 2: Konverterboden
- 3: Konvertermund
- 4: Düsen
- 5: Sauerstoff
- 6: Stahlschmelze
- 7: Sauerstofflanze
- 8: akustische Emissionen
- 9: Schlacke
- 9': Schaumschlacke
- 10: Messanordnung
- 11: Mikrofon
- 12: Parabolantenne
- 13: Auswerteeinrichtung
- 14: Leitung

## Patentansprüche

1. Verfahren zur Bestimmung der Schaumschlackenhöhen beim Frischvorgang in einem Blasstahlkonverter (1), wobei als Kenngröße für die aufschäumende Schlacke (9, 9') die Schallemission (8) des Blasstahlkonverters (1) im Bereich des Konvertermundes (3) mit Hilfe eines Mikrofons (11) aufgenommen und entsprechend ausgewertet werden und zur Charakterisierung der Schaumschlackenhöhen (9') die emittierten höheren Schallfrequenzen ab 1 kHz, und unter anderem bei 2 kHz, genutzt werden, **dadurch gekennzeichnet, dass** das Mikrofon (11) im Brennpunkt einer Parabolantenne (12) angeordnet wird und dass die Schallerfassung mit dem Mikrofon (11) in einem so großen Abstand zum Konverter (1) durchgeführt wird, dass eine Schutzvorrichtung oder eine Gasbeschleierung für das Mikrofon (11) nicht erforderlich sind.

2. Verfahren nach Anspruch 1, **dadurch gekennzeichnet, dass** zur Erzielung eines hohen Nutzsignal/Rauschverhältnisses mit Verstärkung des Nutzsignals und zur Erzielung einer hohen Richtwirkung während der Schallmessung das Mikrofon (11) eine für hohe Schallfrequenzen selektive Verstärkungswirkung nutzt.

3. Vorrichtung zur Bestimmung der Schaumschlackenhöhen beim Frischvorgang in einem Blasstahlkonverter (1), wobei als Kenngröße für die aufschäumende Schlacke (9, 9') die Schallemissionen (8) des Blasstahlkonverters (1) im Bereich des Konvertermundes (3) mit Hilfe eines Mikrofons (11) einer Messvorrichtung (10) aufgenommen und entsprechend durch eine mit dem Mikrofon (11) in Verbindung stehende Auswerteeinrichtung (13) ausgewertet werden, und die Messvorrichtung (10) mit dem Mikrofon (11) und die Auswerteeinrichtung (13) zur Charakterisierung der Schaumschlackenhöhe zur selektiven Schallerfassung und Schallmessung von Schallfrequenzen ab 1 kHz, und unter anderem bei 2 kHz, ausgebildet sind zur Durchführung des Verfahrens nach einem oder mehreren der vorhergehenden Ansprüche, **dadurch gekennzeichnet, dass** das Mikrofon (11) im Brennpunkt einer Parabolantenne (12) angeordnet ist und dass das Mikrofon (11) in einem so großen Abstand zum Konverter (1) angeordnet ist, dass eine Schutzvorrichtung oder eine Gasbeschleierung für das Mikrofon (11) nicht erforderlich sind.

## Claims

1. Method of determining the foamed slag height during oxygen blowing in a steel converter (1), wherein as characteristic magnitude for the foaming slag (9, 9') the sound output (8) of the steel converter (1) is picked up in the region of the converter mouth (3) with the help of a microphone (11) and correspondingly evaluated and for characterisation of the foamed slag height (9') use is made of the emitted higher sound frequencies from 1 kHz and inter alia at 2 kHz, **characterised in that** the microphone (11) is arranged at the focal point of a parabolic antenna (12) and that the sound detection is performed by the microphone (11) at a spacing from the converter (1) of such a size that a protective device or a gas veiling for the microphone (11) is not required.

2. Method according to claim 1, **characterised in that** for achieving a high ratio of useful signal to noise with amplification of the useful signal and for achieving a high directional effect during the sound measurement the microphone (11) uses a selective amplification effect for high sound frequencies.

3. Device for determining the foamed slag heights during oxygen blowing in a steel converter (1), wherein as characteristic magnitude for the foaming slag (9, 9') the sound outputs (8) of the steel converter (1) are picked up in the region of the converter mouth (3) with the help of a microphone (11) of a measuring device (10) and are correspondingly evaluated by an evaluating device (13) connected with the microphone (11), and the measuring device (10) with the microphone (11) and the evaluating device (13) are, for characterisation of the foamed slag height, constructed for selective sound detection and sound measurement of sound frequencies from 1 kHz and inter alia at 2 kHz, for performing the method according to one or more of the preceding claims, **characterised in that** the microphone (11) is arranged at the focal point of a parabolic antenna (12) and that the microphone (11) is arranged at a spacing from the converter (1) of such a size that a protective device or a gas veiling for the microphone (11) is not required.

## Revendications

1. Procédé pour la détermination de la hauteur d'un laitier moussant lors du procédé d'affinage dans un convertisseur d'acier (1), en enregistrant comme caractéristique pour le laitier moussant (9, 9') l'émission (8) du bruit du convertisseur d'acier (1) au niveau de l'orifice du convertisseur (3) à l'aide d'un microphone (11) et en l'évaluant de manière correspondante et en utilisant, pour la caractérisation des hauteurs (9') du laitier moussant, les fréquences de bruit supérieures émises à partir de 1 kHz, et entre autres à 2 kHz, **caractérisé en ce que** le microphone (11) est agencé au foyer d'une antenne parabolique (12) et **en ce que** l'enregistrement du bruit est réalisé par le microphone (11) à une distance telle par rapport au convertisseur (1) qu'un dispositif de protection ou un voile de gaz n'est pas nécessaire pour le microphone (11).

2. Procédé selon la revendication 1, **caractérisé**
**en ce que** pour obtenir un rapport signal utile/bruit élevé avec un renforcement du signal utile et pour obtenir une directivité élevée pendant la mesure du bruit, le microphone (11) utilise un effet de renforcement sélectif pour les fréquences de bruit élevées.

3. Dispositif pour la détermination des hauteurs du laitier moussant lors du procédé d'affinage dans un convertisseur d'acier (1), en enregistrant comme caractéristique pour le laitier moussant (9, 9') les émissions (8) du bruit du convertisseur d'acier (1) au niveau de l'orifice du convertisseur (3) à l'aide d'un microphone (11) d'un dispositif de mesure (10) et en les évaluant de manière correspondante par un dispositif d'évaluation (13) relié au microphone (11) et le dispositif de mesure (10) avec le microphone (11) et le dispositif d'évaluation (13) étant conçus, pour la caractérisation de la hauteur du laitier moussant, pour l'enregistrement et la mesure sélectives du bruit présentant des fréquences à partir de 1 kHz, et entre autres à 2 kHz, pour la réalisation du procédé selon l'une ou plusieurs des revendications précédentes, **caractérisé en ce que** le microphone (11) est agencé au foyer d'une antenne parabolique (12) et **en ce que** le microphone (11) est agencé à une distance telle par rapport au convertisseur (1) qu'un dispositif de protection ou un voile de gaz n'est pas nécessaire pour le microphone (11).
